# EUROPEAN PATENT APPLICATION

(11) **EP 0 771 729 A1**
(43) Date of publication of application: **07.05.1997**
(21) Application number: 96202392.5
(22) Date of filing: 28.08.1996
(51) Int. Cl.: B64D 47/08, G03B 15/00

(54) **Aerial camera platform and signal transmission and reception system**

(30) Priority: 28.08.1995 CA 2157105
(71) Applicant: Carwardine, Ian, Nepean, Ontario K2E 1A3 (CA)
(72) Inventor: Carwardine, Ian, Nepean, Ontario K2E 1A3 (CA)
(74) Representative: Kupecz, A., Drs. c.s.

(57) **Abstract**

An aerial camera platform (3), signal transmission and reception system is based on an aerostat (12) adapted to hold a load beneath its body. A stabilized camera platform is provided beneath the aerostat for mounting a videa camera (8) for angular movement of said video camera about at least rotational axis and for stability against roll and pitch induced motion. Tether means (13) are attached to the aerostat, and includes a strength element (14) for tethering the aerostat against drift, a video signal transmission element, and a remote control signal transmission element. Power means are also provided, along with a ground station (15) to which the tether is attached. The ground station includes video signal reception means, and remote control signal transmission means.

## Description

The present invention relates to the field of aerial camera platforms. In particular, the present invention provides a video camera platform integral with a tethered blimp.

Conventionally, aerial shots for use in the television broadcast or video taping of sports events or other outdoor activities are obtained by mounting one or more cameras on a piloted airship or helicopter. The video signal from the camera or cameras is transmitted to a receiver on the earth via microwave. Accordingly, it is necessary for a skilled operator situated with the receiver to track the airship or helicopter borne microwave transmitter at all times, to ensure a continuous link. In fact, airships and helicopters are certified aircraft operating commercially and it is for this reason that they both must operate above 1,000 feet to adhere to transport regulations. Both types of aircraft vibrate and because of the greater distance from the target, both require the use of expensive, stabilized camera mounts.

It will further be appreciated that airships because of their massive dimensions, must be operated at substantial altitudes. Therefore, they are impractical for use in obtaining acceptable resolution close-up images. Helicopters, on the other hand, must be operated at levels that comply with a panoply of aviation regulations, and in any event are a nuisance when hovered at low altitudes. A helicopter borne camera, moreover, vibrates to such an extent that acceptable images are not readily available without the use of expensive and bulky gyro-stabilization equipment.

Accordingly, it will be appreciated that it is not economically feasible, in most instances to obtain aerial shots for use in the television broadcast or videotaping of a sports event. Furthermore, the quality of the shot that can be obtained is often less than adequate.

One solution to the problem of providing high quality, low cost aerial television camera shots has been to employ a domed or covered stadium in which to conduct the sports event in question. Short stadiums of this sort are equipped with fixed or mobile, very stable, camera platforms in their interior roof structures. Obviously, this solution is feasible in only a small percentage of instances, and will be completely unavailable for such events as alpine skiing, horse racing, yachting, road racing of bicycles or automobiles, and a large number of other events that will be apparent to a broadcaster.

The object of the present invention, in view of the foregoing, is to provide a simple and economical, substantially self-contained system including a tethered aerostat mounting a camera, and a stationary or mobile ground station linked thereto by a tether including aerostat and camera control transmission means and a video signal transmission means.

In a broad aspect, the present invention relates to an aerial camera platform and signal transmission and reception system including, in combination: (i)an aerostat adapted to hold a load beneath its body; (ii) a stabilized camera platform for mounting a video camera; for angular movement of said video camera about at least rotational axis; and for stability against roll and pitch induced motion; (iii) tether means including a strength element for tethering said aerostat against drift; a video signal transmission element; and a remote control signal transmission element; (iv) power means; (v) a ground station to which said tether is attached, and including video signal reception means, and remote control signal transmission means.

In drawings that illustrate the present invention by way of example:
Figure 1 is a schematic diagram of a first embodiment of a tethered aerostat aerial camera platform video transmission and reception system of the present invention;
Figure 2 is a schematic diagram of a second embodiment of a tethered aerostat camera platform/video transmission and reception system of the present invention; and
Figure 3 is a side view partially in phantom, of the stabilized camera mount of the present invention.

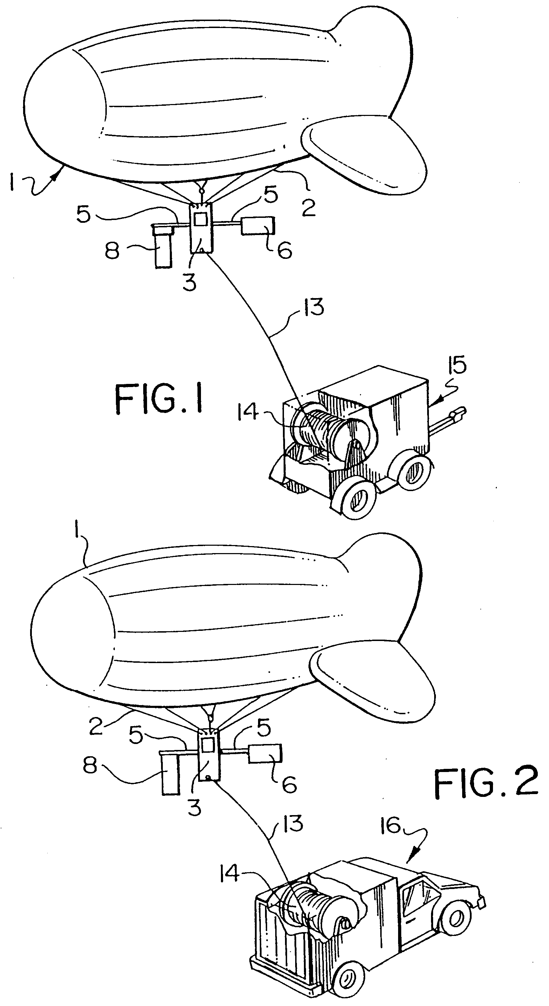

Referring now to Figures 1 and 2, the two generalized embodiments of the present invention are illustrated. Figure 1 shows an aerostat camera platform tethered to a ground station 15. The aerostat 1 is an unmanned blimp, the size of which will be dictated by expected payload. A typical design for the blimp 1 will be teardrop shaped, with a three or four finned tail. A length of about 46 feet, with a 14 foot beam, a volume of 4,000 cubic feet (to be filled with helium) and a payload capacity of 86 pounds will be typical. It is to be particularly noted, though, that the design of the blimp or aerostat is not considered critical, and a person skilled in the field will be able to choose an appropriate design with no difficulty. Factors that will be considered in choosing a design will include payload, expected wind and/or weather conditions, expected working height, and the design of any advertising material the blimp will be carrying.

Slung beneath the blimp, by lines 2 that may be nylon, Kevlar, or any other conventional material, is a main platform frame 3. At the lowermost end of the main platform frame 3, the tether 13 that secures the blimp to the ground station 15/16 is attached.

The tether 13 is extremely lightweight, and strong, being capable of holding the blimp secure against any expected loading due to wind conditions. The tether 13 also serves as structural or supporting member to guide more fragile and non-stress resistant cabling from the blimp 1 to the ground station 15/16. In a typical embodiment, the tether will include at least the following elements:
1. 1 element, for instance, of Mil Spec 17 RG179U co-axial cable that carries camera control multiplex signal to the aerostat from the ground control system.
2. 2 copper AWG 16 gauge conductors that supply appropriate power to on-board power systems.
3. 1 or more individually buffered fibre optic elements. The optical fibre(s) carries the fibre optic camera signal down to the ground. This element of the system is required to keep the camera signal free of RF (Microwave specifically) interference.
4. All of these elements are wrapped in Kevlar™ 49, a strength member, to hold on to the blimp itself. Significant wind induced loads are anticipated at all times, so this element has been designed with a 5 times safety margin; a minimum design break strength of about 1,500 pounds.
5. The entire package is extruded through a machine that applies a very tough, waterproof material to serve as a protective jacket.

In a typical embodiment, the tether will be approximately 3/8" in diameter. The strength element is terminated at each end with eye thimbles, with all other elements "pig-tailed" out the side of the tether for individual terminations.

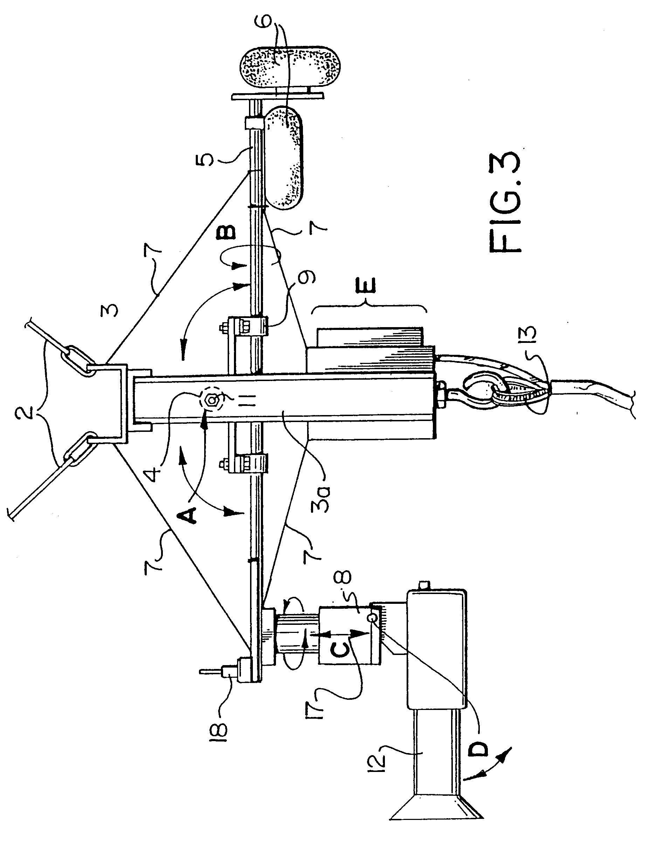

With reference to Figure 3, and as noted above, between the tether 13 and the aerostat or blimp 1, attached by lines 2 to the aerostat, is the main frame 3 of the camera platform, which is comprised of a pair of downwardly depending plates 3a. The main frame 3 is apertured at its upper and lower ends for attachment of the blimp lines 2 and the tether 13. Generally centrally located on main frame 3 between the plates 3a is a pivot axis A (the direction of pivoting motion shown by the arrow) defined by a swivel bearing 4 made for instance of DELRIN™, affixed to the main frame by an axle bolt 11 that extends between the plate 3a. The swivel 4 is thus loosely affixed to the main frame 3, so that it will pivot when the blimp 1 pitches due to wind conditions.

A second axis B being the roll axis, is provided perpendicular to the pitch axis A. The roll axis is defined by a pair of bearings in pillow blocks 9 that house bearings for a longitudinal shaft 5 that extends in a fore and aft direction relative to the blimp 1. Affixed to the aft end of the longitudinal shaft 5 are two or more gyroscopic stabilizers 6, at 90° to one another. The provision of two stabilizers, such as KenLab KS-8 gyro stabilizers, off set by 90°, provides excellent damping against sudden motion in any direction. In the event of any motion, the system is damped by the gyros 6, and then promptly stabilized by elastic shock absorbing cording 7, or alternatively velocity squared viscous dampers and springs.

At the fore end of the longitudinal shaft 5 (which is preferably fabricated from high strength cold rolled steel) is located at mating adaptor 17, the function of which is to provide a mount for pan/tilt head 8 of a video camera that also includes a zoom lens 12. Vertically through adaptor 17 extends a third axis C (defined by the arrow shown in Figure 3). Adaptor 17 includes a servo-electric motor, or other suitable actuating means, to permit rotation of the pan-tilt head 8 in a 360° circle around axis C. It will be understood, however, that the 60° of view behind the pan-tilt head will be obstructed. Pan-tilt head 8 is provided around its centre with a further axis D around pivot point 10 that permits the camera to pivot up and down in an arc as indicated by the arrow at D. Axis D is perpendicular to axis C.

It will be understood that axis A and axis B are passive, and are provided to stabilize the camera mounting platform. Axis C and axis D, however, are active, and are controllable by a multiplexed signal (or other suitable means) carried by the aforementioned coaxial cable in the tether 13. The signal from the camera which may, for instance be a PANASONIC™ WV-E550 Digital camera with a FUJINON™ lens, is carried by the optical fibre link in the tether. Moreover, it will be understood that the camera will be controlled and the video signal transmitted by means of conventional miniaturized broadcast components E located on the main frame 3. These components will typically include a multiplexer, a power distributor/transformer, and a fibre optic transmitter, for transmitting picture signals. The transmitter may also be used to transmit wind measurement data from anemometer 18.

Moreover, the main frame may have attached thereto one or more RF receiving units for receiving signals, e.g., microwave signals, from cameras recording images at remote and dispersed ground locations. In this regard, it will be understood that at many events, free roaming camera operators may provide optimal images, but to utilize the picture from such camera operators on a live basis, the signal from the camera must be collected while the picture is being shot. This is conventionally accomplished by microwave transmission of the signal to a single location at an elevated location, such as a crane. The signal is then fed to a mobile production trailer, where a broadcast is being directed. The tethered camera platform of the present invention may, therefore, be utilized at low cost as a signal collection station, and with its fibre optic retransmissions capability, it is not difficult to accommodate five or more RF receivers.

The earth end of the tether 13 is wound around a rotatable drum 14 provided either in a fixed ground station 15, as may be the case in the example of a stadium, or in a mobile ground station, e.g., a specially constructed van that can be located near a remote event location. The video signal received by the ground station is processed conventionally, and utilized by a program director in a conventional manner. Control of the two active axis C and D will be effected by remote actuators in connection with the ground station 15/16, through a multiplexed signal carried by the coaxial cable in the tether 13. Control of the take up drum 14, which will be part of a winch (not illustrated) will be achieved through the use of an SCR electronic speed controller.

The fibre optic signal carried down from the platform inside the tether will feed an optical to digital converter which will physically be mounted inside the winch drum or in the ground vehicle.

It is to be understood that the examples described above are not meant to limit the scope of the present invention. It is expected that numerous variants will be obvious to the person skilled in the art, without any departure from the spirit of the invention. The appended claims, properly construed, form the only limitation upon the scope of the invention.

## Claims

1. An aerial camera platform and signal transmission and reception system including, in combination:
i) an aerostat adapted to hold a load beneath its body;
ii) a stabilized camera platform for mounting a video camera; for angular movement of said video camera about at least rotational axis; and for stability against roll and pitch induced motion;
iii) tether means including a strength element for tethering said aerostat against drift; a video signal transmission element; and a remote control signal transmission element;
iv) power means;
v) a ground station to which said tether is attached, and including video signal reception means, and remote control signal transmission means.

2. An aerial camera platform and signal transmission and reception system as described in claim 1, wherein said power means comprise an electrical power source in said ground station; a power transmission element of said tether, and power reception and distribution means in said platform.

3. An aerial camera platform and signal transmission and reception system as described in claim 2, wherein said platform further includes means for angular movement of said camera about two rotational axis comprising a pan axis and a tilt axis.

4. An aerial camera platform and signal transmission and reception system as described in claim 3, wherein said video signal transmission means is an optical fibre.

5. An aerial camera platform and signal transmission and reception system as described in claim 4, wherein said remote control signal transmission means is through a co-axial cable, said signal being a multiplexed signal, said remote control signal controlling angular movement of said video camera in said pan axis and said tilt axis, and camera set-up functions.

6. An aerial camera platform and signal transmission and reception system as described in any one of claims 1, 2, 3, 4 or 5, wherein said camera platform includes a main frame member connected to said aerostat by lines from the body of said aerostat, and to said ground station by said tether.

7. An aerial camera platform and signal transmission and reception system as described in claim 6, wherein a substantially horizontal rod extends through a block pivoted to main frame, in a fore and aft direction, said horizontal rod being rotatable in said main frame, there being a gyroscopic stabilization means depending from one end of said rod, and said video camera being mounted on the other end of said rod.

8. An aerial camera platform and signal transmission and reception system as described in Claim 7, wherein said gyroscopic stabilizer means includes two gyroscopes, mounted for rotation at 90° to one another, at the aft end of said rod.
